# EUROPEAN PATENT APPLICATION

(11) **EP 4 648 138 A1**
(43) Date of publication of application: **12.11.2025**
(21) Application number: 24174954.8
(22) Date of filing: 08.05.2024
(51) Int. Cl.: H01M 4/62, H01M 10/052, H01M 10/0562

(54) **COMPOSITE SOLID ELECTROLYTE**

(71) Applicant: Belenos Clean Power Holding AG, 2502 Bienne (CH)
(72) Inventor: AFYON, Semih, 4310 Rheinfelden (CH)
(74) Representative: ICB SA

(57) **Abstract**

The present invention relates to a composite solid electrolyte mixture comprising a the lithium garnet-type structure material and LiBSCl, wherein LiBSCl comprises Li₃BO₃, Li₂SO₄ and LiCl. The invention further relates to a composite solid electrolyte obtained from the mixture, a solid state battery comprising the composite solid electrolyte, and to methods of producing the composite solid electrolyte and the solid state battery.

## Description

### Technical field of the invention

The present invention relates to a composite solid electrolyte and solid state batteries, in particular lithium ion batteries, comprising the electrolyte. The invention further relates to methods of producing the composite solid electrolyte.

### Background

Inorganic materials, such as ceramics, are widely used in electronics, energy storage and extreme environments due to their high thermal, mechanical and chemical stability. Conventional synthesis of such inorganic materials often involves a solid state reaction to form the inorganic component from a precursor, and sintering the inorganic component to obtain a solid (inorganic) component. Each step typically requires high temperatures and long processing time.

The long processing time is also one of the issues of the conventional methods in the production of inorganic-based (e.g. ceramic-based) solid state electrolytes (SSEs). Such SSEs are a promising alternative to for example liquid electrolytes, which may leak from the battery, thereby imposing safety issues. In particular LLZO (Li₇La₃Zr₂O₁₂), including its doped versions such as Li_{6.75}Al_{0.25}La₃Zr₂O₁₂, is a promising material for SSEs due to its exceptional ionic conductivity - in the range of 10⁻⁴ S/cm, capability to prevent dendrite formation and to enhance battery stability.

However, sintering of green bodies based on LLZO require high sintering temperatures, such as temperatures above 1050 °C, in order to obtain an electrolyte having a sufficient density (.i.e. a sufficiently low porosity) and high ionic conductivity.

One way to reduce the required sintering temperature is by using sintering aids and/or nanocrystallites.

A shortcut to garnet-type fast Li-ion conductors for all-solid state batteries, S. Afyon, F. Krumeich, et al., J. Mater. Chem. A, 3 (2015), pp. 18636-18648, discloses a sintering method for sintering Ga-doped LLZO (Li_{6.4}Ga_{0.2}La₃Zr₂O₁₂) nanocrystallites having an average diameter of 200-300 nm. The presence of nanocrystallites allows to sinter at temperatures of 950 °C, wherein the cubic phase of LLZO is maintained, leading to total ionic conductivity values of 4.0 * 10⁻⁴ S/cm at 20 °C.

Although the sintering temperature of the foregoing method is already significantly reduced compared to state of the art sintering methods, the temperature is still considered high, consuming significant amounts of energy. A further disadvantage is the requirement for LLZO being in the form of nanocrystallites, because producing such nanocrystals is known to be expensive. Further, Ga is known to be expensive for industrial purposes, and has a limited stability against lithium, which may lead to the formation of a Li-Ga alloy. When used in batteries, this Li-Ga alloy may lead to short-circuiting, thereby limiting the long term stability of the battery.

Another way to reduce the required sintering temperature is by using different synthesis methods.

Preparation of Li7La3(Zr2 - xNbx)O12 (x = 0 - 1.5) and Li3BO3/LiBO2 composites at low temperatures using a sol-gel process, N.C. Rosero-Navarro, T. Yamashita, et al., Solid State Ionics 285 (2016) pp. 6-12, discloses the use of LisBOs and LiBO₂ as additives to reduce the sintering temperature to 900 °C. At this temperature a sintering density of 90 % is obtained, as well as an ion conductivity of 7 * 10⁻⁵ S/cm at 30 °C (using 6.5 wt% Li₃BO₃). However, it is known that Nb has a limited stability against lithium. When used in batteries, the presence of Nb may lead to short circuiting, thereby limiting the long term stability of the battery.

Disadvantages of the above-mentioned methods include the need for additives or nanocrystallites to allow a lower sintering temperature for producing SSEs having an acceptable performance, in particular the total ionic conductivity.

A further disadvantage is that these lower sintering temperatures are still considered too high for sintering other components of a battery cell, in particular the anode and/or the cathode. Consequently, the above-mentioned methods require first the preparation of the SSE by sintering at high temperature, followed by assembly of the battery cell. When aiming at producing an all ceramic battery cell, i.e. wherein the anode, the cathode and the solid electrolyte are all ceramic materials, this requires a complex process comprising several sintering cycles of different components.

### Summary of the invention

It is an aim of the present invention to overcome one or more of the foregoing drawbacks. It is an aim of the present invention to provide a composite solid electrolyte (i.e. a solid state electrolyte, SSE) comprising a lithium garnet-type structure material, the SSE having an excellent total ionic conductivity when in use in a battery cell, both at room temperature and elevated temperatures.

It is a further aim of the present invention to provide a method of producing a composite solid electrolyte comprising a lithium garnet-type structure material, wherein the method comprises sintering at a temperature lower than prior art sintering methods, thereby reducing the energy consumption of the process, wherein the obtained SSEs have a performance, in particular a total ionic conductivity when in use in a battery cell, that is equal to or better than the SSEs obtained with traditional high temperature sintering processes.

It is a further aim to provide a method of producing a solid state battery (SSB), in particular an all ceramic SSB, wherein some or all components - including the anode and/or the cathode - can be assembled and then sintered together, thereby reducing the overall energy consumption of the method of producing the SSB, as well as the complexity of the process and the number of steps required.

According to a first aspect of the present disclosure, there is provided a composite solid electrolyte mixture as set out in the appended claims.

The composite solid electrolyte mixture comprises or substantially consists of a lithium garnet-type structure material and LiBSCI. LiBSCI comprises or substantially consists of LisBOs, Li₂SO₄ and LiCl.

Advantageously, the lithium garnet-type structure material comprises or substantially consists of lithium lanthanum zirconium oxide (Li₇La₃Zr₂O₁₂, LLZO). LLZO can be doped, for example aluminium-doped (Li_{6.75}Al_{0.25}La₃Zr₂O₁₂, Al-doped LLZO).

Advantageously, the composite solid electrolyte mixture comprises between 50 and 90 % by weight, preferably between 60 and 85 % by weight, more preferably between 70 and 80 % by weight, for example 75 % by weight the lithium garnet-type structure material, based on the total weight of the composite solid electrolyte mixture.

Advantageously, the composite solid electrolyte mixture comprises between 10 and 50 % by weight, preferably between 15 and 40 % by weight, more preferably between 20 and 30 % by weight, for example 25 % by weight LiBSCI, based on the total weight of the composite solid electrolyte mixture.

Advantageously, the composite solid electrolyte mixture comprises between 50 and 90 % by weight of the lithium garnet-type structure material and between 50 and 10 % by weight LiBSCI, preferably between 60 and 85 % by weight of the lithium garnet-type structure material and between 40 and 15 % by weight LiBSCI, more preferably between 70 and 80 % by weight of the lithium garnet-type structure material and between 30 and 20 % by weight LiBSCI, based on the total weight of the composite solid electrolyte mixture.

Advantageously, LiBSCI comprises between 50 and 85 % by weight, preferably between 65 and 75 % by weight, for example 70 % by weight LisBOs, based on the total weight of LiBSCI in the composite solid electrolyte mixture.

Advantageously, LiBSCI comprises between 10 and 40 % by weight, preferably between 20 and 35 % by weight, for example 27 % by weight Li₂SO₄, based on the total weight of LiBSCI in the composite solid electrolyte mixture.

Advantageously, LiBSCI comprises between 1 and 10 % by weight, preferably between 1 and 5 % by weight, for example 3 % by weight LiCI, based on the total weight of LiBSCI in the composite solid electrolyte mixture.

Advantageously, LiBSCI comprises between 50 and 85 % by weight LisBOs, between 10 and 40 % by weight Li₂SO₄ and between 1 and 10 % by weight LiCI, preferably between 65 and 75 % by weight Li₃BO₃, between 20 and 35 % by weight Li₂SO₄ and between 1 and 5 % by weight LiCI, based on the total weight of LiBSCI in the composite solid electrolyte mixture.

According to a second aspect of the present disclosure, there is provided a composite solid electrolyte as set out in the appended claims.

Advantageously, the composite solid electrolyte is obtained or obtainable by sintering of the composite solid electrolyte mixture of the first aspect.

The composite solid electrolyte comprises or substantially consists of a lithium garnet-type structure material and LiBSCI, wherein LiBSCI comprises or substantially consists of Li₃BO₃, Li₂SO₄ and LiCl.

Advantageously, the lithium garnet-type structure material is as hereinabove described, and preferably comprises or substantially consists of LLZO.

The inventors have surprisingly discovered that the presence of LiBSCI in the solid electrolyte, in addition to the lithium garnet-type structure material, such as LLZO, allows to reduce the total resistance of the electrolyte, thereby improving the total ionic conductivity when compared to existing SSEs comprising lithium garnet-type structure material.

Advantageously, the composite solid electrolyte comprises or substantially consists of a matrix comprising or substantially consisting of LiBSCI. Advantageously, the lithium garnet-type structure material is dispersed within the matrix.

Advantageously, LiBSCI is at least partially present in the composite solid electrolyte as a glassy phase, for example a glass network. With "at least partially present as a glassy phase" is meant that at least 25 %, preferably at least 50 %, more preferably at least 75 % of LiBSCI is present in the composite solid electrolyte as a glassy phase.

Advantageously, the lithium garnet-type structure material is at least partially crystalline, in particular when dispersed within a matrix comprising or substantially consisting of LiBSCI. Advantageously, the lithium garnet-type structure material is at least partially present as a particulate material (i.e. particles or grains), in particular when dispersed within the matrix.

The term "at least partially crystalline" is used in the present disclosure to refer to at least 50 %, preferably at least 60 %, more preferably at least 70 %, such as at least 80 of the lithium garnet-type structure material being present in the composite solid electrolyte as a crystalline phase, wherein the remainder, i.e. at most 50 %, preferably at most 40 %, more preferably at most 30 %, such as at most 20 %, is present in an amorphous phase.

Without wishing to be bound by any theory, the inventors believe that LiBSCI in the composite solid electrolyte forms a glassy phase at the surface of the lithium garnet-type structure material, thereby lowering the total resistance of the electrolyte and increasing the total ionic conductivity, when compared to existing lithium garnet-type structure material based SSEs.

Advantageously, the composite solid electrolyte has a total ionic conductivity between 10⁻³ and 10⁻⁶ S/cm at any temperature between room temperature and 100 °C.

According to a third aspect of the present disclosure, there is provided a solid state battery as set out in the appended claims.

The solid state battery comprises an electrolyte according to the second aspect of the present disclosure, i.e. an electrolyte comprising or substantially consisting of a lithium garnet-type structure material and LiBSCI, or an electrolyte obtained by sintering the composite solid electrolyte mixture of the first aspect of the present disclosure.

Advantageously, the solid state battery is an all ceramic solid state battery. Advantageously, the solid state battery is a secondary battery, such as an all ceramic secondary battery.

According to a fourth aspect of the present disclosure, there is provided a method of producing a composite solid electrolyte as set out in the appended claims.

Advantageously, the composite solid electrolyte produced by the method of the fourth aspect is a composite solid electrolyte according to the second aspect of the present disclosure.

The method comprises sintering a composite solid electrolyte mixture comprising or substantially consisting of a lithium garnet-type structure material and LiBSCI, wherein the lithium garnet-type structure material and LiBSCI are as hereinabove described. Advantageously, the composite solid electrolyte mixture is according to the first aspect of the present disclosure.

The mixture is sintered at a temperature between 600 °C and 1000 °C, preferably between 700 °C and 900 °C, more preferably between 750 °C and 850 °C, in an inert atmosphere.

According to a fifth aspect of the present disclosure, there is provided a method of producing a solid state battery as set out in the appended claims. Advantageously, the solid state battery is according to the third aspect of the present disclosure, i.e. advantageously is an all ceramic solid state battery.

According to a first embodiment, the method comprises:
- applying a composite solid electrolyte mixture according to the first aspect of the present disclosure to a surface of an anode or a cathode,
- sintering the mixture-anode or mixture-cathode assembly a temperature between 600 °C and 1000 °C, preferably between 700 °C and 900 °C, more preferably between 750 °C and 850 °C, in an inert atmosphere, and
- providing a cathode or an anode at the exposed surface of the sintered mixture, thereby obtaining the solid state battery.

According to a second embodiment, the method comprises providing a composite solid electrolyte mixture according to the first aspect of the present disclosure between an anode and a cathode, and sintering the anode-mixture-cathode assembly, wherein the sintering is performed at a temperature and in an atmosphere as hereinabove described for the first embodiment.

The inventors have surprisingly discovered that the presence of LiBSCI in the composite solid electrolyte mixture comprising a lithium garnet-type structure material such as LLZO allows to significantly reduce the sintering temperature for lithium garnet-type structure material comprising compounds, for example from temperatures of 1050 °C and higher to temperatures between 800 °C and 850 °C. Without wishing to be bound by any theory, the inventors believe that the lower sintering temperature is made possible by the formation of a glassy network of LiBSCI on the surface of the lithium garnet-type structure material.

An advantage of this substantially lower sintering temperature is that it becomes possible to co-sinter the mixture with one or both of an anode and a cathode, thereby rendering the method of producing a solid state battery, in particular an all ceramic solid state battery, less complex and less energy consuming. It is known that for all ceramic SSBs, the anode and/or the cathode comprise materials that require sintering at temperatures below 1000 °C, preferably even below 900 °C, in order to avoid any degradation or damage, leading to inferior batteries.

Consequently, since the methods of the invention and the composite solid electrolyte mixture allow sintering at sub-1000 °C temperatures, it becomes possible to assemble first the anode and/or the cathode with the composite solid electrolyte mixture, and then perform a single sintering step. This is contrary to prior art methods which require separate sintering steps for the anode and/or the cathode on one hand - at sub-1000 °C temperatures, and for the SSE at the other hand - at temperatures above 1000 °C.

Advantages of the methods and the composite solid electrolyte mixture of the invention thus include lower energy consumption during sintering, and a less complex process of producing a solid state battery, in particular an all ceramic solid state battery.

### Description of the figures

Aspects of the invention will now be described in more detail with reference to the appended drawings, wherein same reference numerals illustrate same features and wherein:
- Figure 1 shows the X-ray diffraction (XRD) pattern for a composite solid electrolyte of the invention after grinding the electrolyte to a powder;
- Figures 2 and 3 show scanning electron microscope (SEM) images of the cross-section of an inventive composite solid electrolyte at different magnifications;
- Figure 4 shows the energy dispersive X-ray analysis (EDX) analysis from the cross-section of an inventive composite solid electrolyte;
- Figure 5 shows the total ionic conductivity for two Li-Li symmetrical cells comprising a reference and an inventive electrolyte, respectively; and
- Figure 6 shows the galvanostatic cycling of an inventive battery cell.

### Detailed description of the invention

The composite solid electrolyte mixture and the composite solid electrolyte of the present disclosure comprise or substantially consist of a lithium garnet-type structure material and LiBSCI. LiBSCI is also known as a ternary glass ceramic of borate, Li₂O₄ and a lithium halide. In other words, the composite solid electrolyte comprises a lithium garnet-type structure material and a ternary glass ceramic of borate, Li₂O₄ and a lithium halide. Yet said differently, the composite SSEs of the invention are ceramic SSEs, more particularly glass ceramic SSEs or glassy ceramic SSEs.

Advantageously, the lithium garnet-type structure material comprises or substantially consists of LLZO. LLZO can be doped, in particular with dopants known in the art, such as aluminium (Al).

Advantageously, the borate comprises or substantially consists of LisBOs. Alternatively or additionally, yet advantageously, the borate can comprise one or more of B₂O₃, LiBO₂, Li₄B₂O₅, and Li₆B₄O₉.

The halide can be any one of chloride, bromide, iodide, fluoride, preferably chloride or fluoride, more preferably chloride. The lithium halide can thus be any one of LiCI, LiBr, LiI and LiF, preferably LiCI or LiF, more preferably LiCI. The glass ceramic solid electrolyte can comprise two or more lithium halides, advantageously two or more of LiCI, LiBr, LiI and LiF.

Advantageously, the composite solid electrolyte comprises between 50 and 90 % by weight, preferably between 60 and 85 % by weight, more preferably between 70 and 80 % by weight, for example 75 % by weight the lithium garnet-type structure material, based on the total weight of the composite solid electrolyte.

Advantageously, the composite solid electrolyte comprises between 10 and 50 % by weight, preferably between 15 and 40 % by weight, more preferably between 20 and 30 % by weight, for example 25 % by weight LiBSCI, based on the total weight of the composite solid electrolyte.

Advantageously, the composite solid electrolyte comprises between 50 and 90 % by weight of the lithium garnet-type structure material and between 50 and 10 % by weight LiBSCI, preferably between 60 and 85 % by weight of the lithium garnet-type structure material and between 40 and 15 % by weight LiBSCI, more preferably between 70 and 80 % by weight of the lithium garnet-type structure material and between 30 and 20 % by weight LiBSCI, based on the total weight of the composite solid electrolyte.

Advantageously, LiBSCI comprises between 50 and 85 % by weight, preferably between 65 and 75 % by weight, for example 70 % by weight of borate, preferably Li₃BO₃, based on the total weight of LiBSCI in the composite solid electrolyte.

Advantageously, LiBSCI comprises between 10 and 40 % by weight, preferably between 20 and 35 % by weight, for example 27 % by weight Li₂SO₄, based on the total weight of LiBSCI in the composite solid electrolyte.

Advantageously, LiBSCI comprises between 1 and 10 % by weight, preferably between 1 and 5 % by weight, for example 3 % by weight of lithium halide, preferably LiCI, based on the total weight of LiBSCI in the composite solid electrolyte.

Advantageously, LiBSCI comprises between 50 and 85 % by weight of borate, between 10 and 40 % by weight Li₂SO₄ and between 1 and 10 % by weight of lithium halide, preferably between 65 and 75 % by weight of borate, between 20 and 35 % by weight Li₂SO₄ and between 1 and 5 % by weight of lithium halide, based on the total weight of LiBSCI in the composite solid electrolyte.

Advantageously, the composite solid electrolytes of the present disclosure are dense electrolytes, i.e. electrolytes having a low porosity. More particularly, the electrolytes advantageously have a density equal to or higher than 70 % of the theoretical density of the electrolyte. The theoretical density is calculated from the densities of the compounds comprised in the electrolyte and the composition of the electrolyte (amount of each compound). The density of the electrolyte is calculated by dividing its weight by its volume.

The present invention further relates to solid state batteries (i.e. all solid batteries) (SSBs), in particular secondary batteries, comprising the inventive composite solid electrolyte.

Advantageously, the battery further comprises a cathode, which can be any suitable cathode known in the art. Advantageously, the battery further comprises an anode, which can be any suitable anode known in the art.

Advantageously, the SSB is an all ceramic SSB, i.e. a SSB wherein all components - anode, cathode and electrolyte, are ceramic materials.

The present invention also relates to methods of producing the composite SSE. The method advantageously comprises an operation of preparing a mixture, a shaping operation and a sintering operation.

Advantageously, the mixture preparation operation comprises mixing a lithium garnet-type structure material and LiBSCI. To obtain a homogeneous mixture, mixing techniques known in the art can be used, for example ball-milling or pearl-milling.

Advantageously, the mixture comprises between 50 and 90 % by weight of the lithium garnet-type structure material and between 50 and 10 % by weight LiBSCI, preferably between 60 and 85 % by weight of the lithium garnet-type structure material and between 40 and 15 % by weight LiBSCI, more preferably between 70 and 80 % by weight of the lithium garnet-type structure material and between 30 and 20 % by weight LiBSCI, based on the total weight of the mixture.

LiBSCI is as hereinabove described, i.e. comprises or substantially consists of a ternary glass ceramic of borate, Li₂SO₄ and a lithium halide.

Advantageously, LiBSCI comprises between 50 and 85 % by weight LisBOs, between 10 and 40 % by weight Li₂SO₄ and between 1 and 10 % by weight LiCI, preferably between 65 and 75 % by weight Li₃BO₃, between 20 and 35 % by weight Li₂SO₄ and between 1 and 5 % by weight LiCI, based on the total weight of LiBSCI in the mixture.

Advantageously, the mixture is then shaped during a shaping operation. Shaping can be performed by methods known in the art, for example by pressing the mixture into a predetermined shape or by laser cutting the mixture into a predetermined shape. Upon shaping, a green body is obtained. The green body can have a variety of shapes, such as a sheet, a pellet, a disk, etc., wherein the shape is defined by the shape required for the composite solid electrolyte.

The green body is then sintered during the sintering operation. The sintering operation comprises heating the green body to a sintering temperature, and maintaining the green body at the sintering temperature for a predetermined sintering duration, during which the green body is sintered.

Advantageously, the sintering operation is performed in an atmosphere known in the art. Preferably, the sintering operation is performed in an inert atmosphere, more preferably in an inert atmosphere comprising or substantially consisting of argon.

Advantageously, the sintering temperature is between 600 °C and 1000 °C, preferably between 700 °C and 900 °C, more preferably between 750 °C and 850 °C.

Advantageously, heating the green body to the sintering temperature is performed at a heating rate between 5 °C/s and 500 °C/s, i.e. can be at a traditional heating rate or at an ultrafast heating rate.

Advantageously, the sintering duration is between 5 seconds and 600 seconds, preferably between 10 seconds and 300 seconds, more preferably between 20 seconds and 200 seconds, such as between 30 seconds and 150 seconds, or between 45 seconds and 100 seconds.

It will be understood that the sintering duration depends, amongst others, on the heating rate, the sintering temperature and the equipment used.

### Examples

### Example 1

A mixture of 7.5 g Li_{6.25}Al_{0.25}La₃Zr₂O₁₂ (Al-doped LLZO) and 2.5 g LiBSCI was ball-milled at 400 rpm for 2 hours under an argon atmosphere. LiBSCI contained 1.75 g LisBOs, 0.675 g Li₂SO₄ and 0.075 g LiCI. The mixture was then pressed into green body pellets with an uniaxial press.

The green body pellets were then heated to 850 °C and sintered at 850 °C for 100 seconds, followed by cooling down to room temperature. The obtained composite solid electrolyte pellets were then partially ground to powder and partially cut into pieces for analysis.

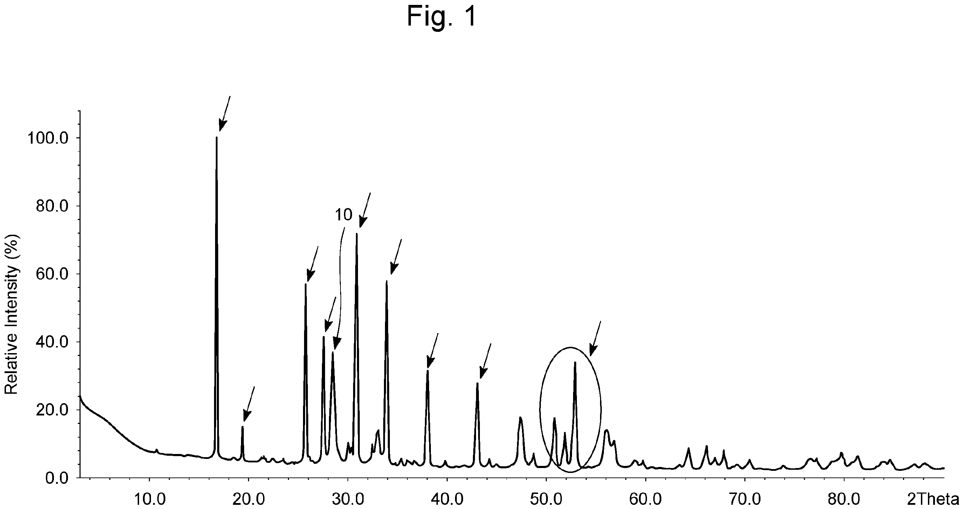

Fig. 1 shows the X-ray diffraction (XRD) pattern for the composite solid electrolyte powder. The signal at 2θ between 0° and 20° indicates the presence of glassy phases, which are believed to be formed by LiBSCI. Peaks indicated with an arrow refer to peaks contributed to LLZO in the crystalline phase, which confirms the presence of LLZO, and in particular the presence of at least a portion of LLZO in the crystalline phase. It is believed that at least 70 % of the LLZO was present in the crystalline phase. The peak 10 at 2θ between 28° and 30° is contributed to LisBOs.

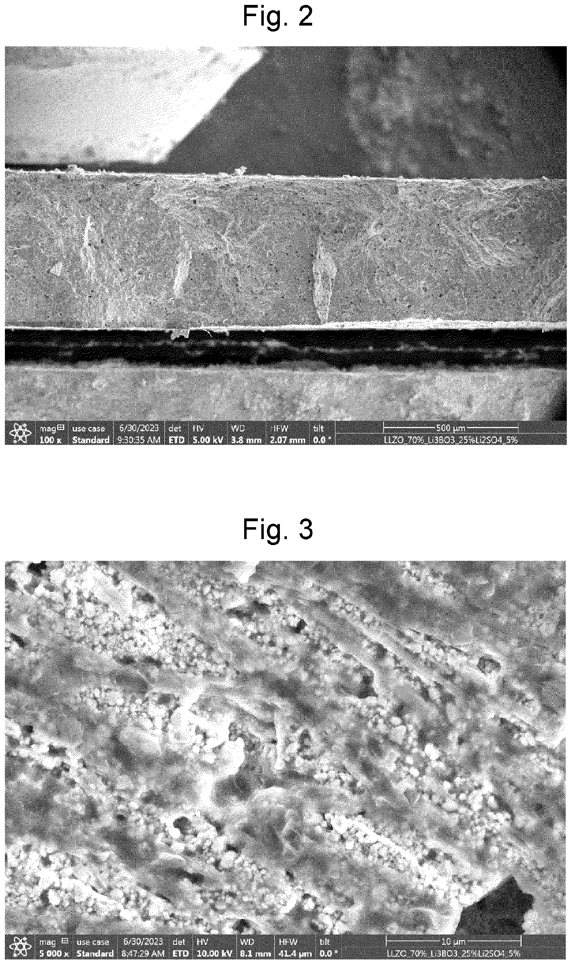

Scanning Electron Microscopy (SEM)-analysis was performed on pieces of the composite solid electrolyte using a high resolution scanning electron microscope FEI (Teneo) under high-vacuum. Figs. 2 and 3 show SEM-images at different magnifications of the cross-section of the composite solid electrolyte. At low magnification (Fig. 2), a dense structure (i.e. a low porosity) is visible. At higher magnification (Fig. 3) a glassy phase matrix is clearly visible - contributed to the LiBSCI - with crystalline phases - contributed to Al-doped LLZO - dispersed therein.

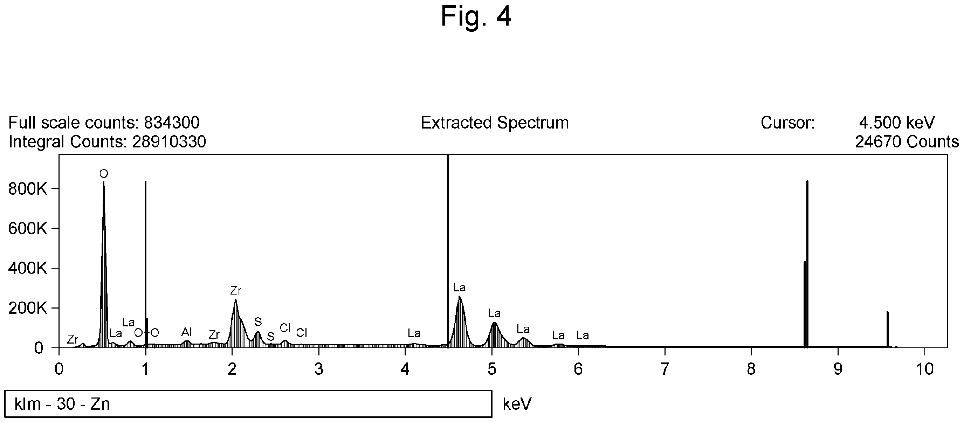

Fig. 4 shows the energy dispersive X-ray analysis (EDX) analysis from the cross-section of the electrolyte. All elements of Al-doped LLZO, as well as of Li₃BO₃, Li₂SO₄ and LiCI were detected, with the exception of boron (B), as EDX does not allow the detection thereof. This confirms that all components, Al-doped LLZO and LiBSCI, of the mixture are retained in the obtained composite solid electrolyte.

A reference solid electrolyte was prepared as well. 10 g Al-doped LLZO was pressed into green body pellets and heated and sintered using the same parameters as for the inventive green body pellets (i.e. heating to 850 °C and sintering at 850 °C for 100 seconds, followed by cooling down to room temperature).

### Example 2

The total ionic conductivity and the electrochemical properties of the inventive and reference composite solid electrolytes of Example 1 were determined by means of Li-Li symmetric cells. A reference Li-Li symmetric cell was prepared with an 800 µm thick reference composite solid electrolyte pellet as prepared in Example 1. An inventive Li-Li symmetric cell was prepared with an 800 µm thick inventive composite solid electrolyte pellet as prepared in Example 1. Both Li-Li symmetric cells further comprised metallic lithium with a thickness of 50 µm as electrodes. Cu foils with a thickness of 5-8 µm were used as the current collectors.

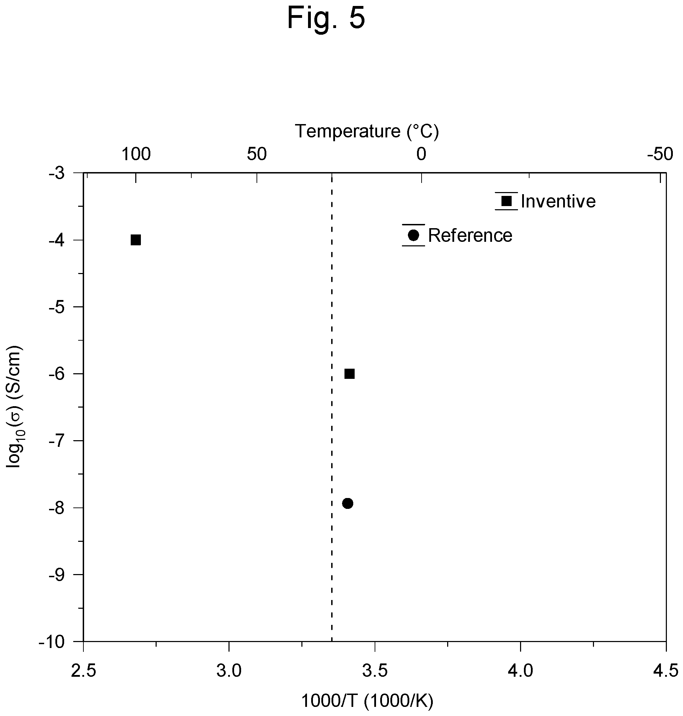

Fig. 5 shows the total ionic conductivities for both Li-Li symmetric cells obtained at both 25 °C and 100 °C. At 25 °C, the total ionic conductivity of the Li-Li symmetric cell with the inventive electrolyte was 10⁻⁶ S/cm, whereas for the Li-Li symmetric cell with the reference electrolyte the total ionic conductivity was only 10⁻⁸ S/cm. At 100 °C, the total ionic conductivity of the Li-Li symmetric cell with the inventive electrolyte was 10⁻⁴ S/cm.

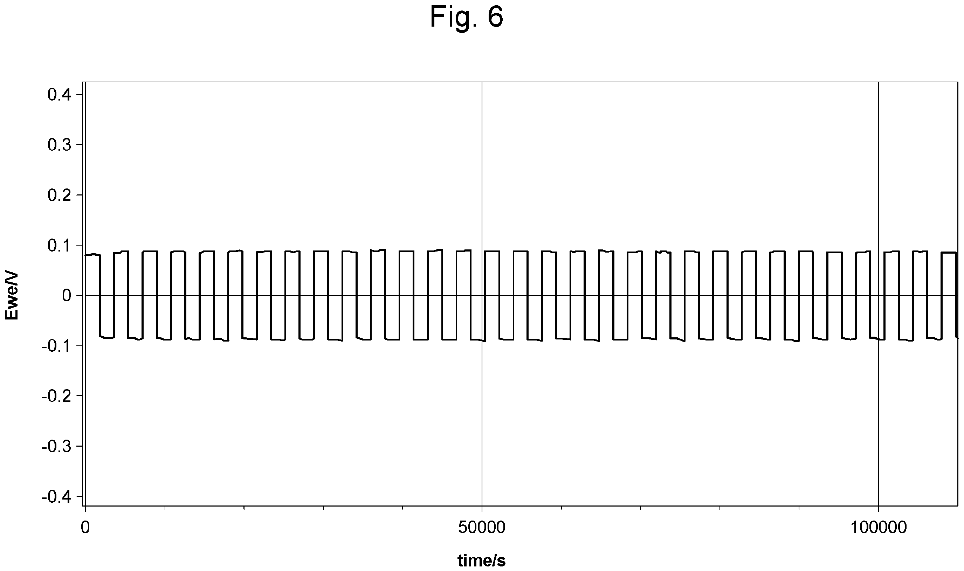

Galvanostatic cycling of the inventive Li-Li symmetric cell was also performed at 100 °C and at a current density of 0.1 mA/cm². From Fig. 6 it is clear that a stable cycling was seen for a test duration of more than 100000 seconds, which corresponds to about 150 charging/discharging cycles, after which the test was stopped.

### Nomenclature

10. Peak in the XRD pattern of an inventive electrolyte contributed to Li₃BO₃

## Claims

1. A composite solid electrolyte mixture comprising a lithium garnet-type structure material and LiBSCI, wherein LiBSCI comprises Li₃BO₃, Li₂SO₄ and LiCl.

2. The composite solid electrolyte mixture according to claim 1, wherein the lithium garnet-type structure material comprises lithium lanthanum zirconium oxide (LLZO), preferably wherein LLZO is doped, more preferably wherein LLZO is Al-doped LLZO.

3. The composite solid electrolyte mixture according to any one of the preceding claims, comprising between 50 and 90 % by weight of the lithium garnet-type structure material and between 50 and 10 % LiBSCI, based on the total weight of the composite solid electrolyte mixture.

4. The composite solid electrolyte mixture according to any one of the preceding claims, wherein LiBSCI comprises between 50 and 85 % by weight LisBOs, between 10 and 40 % by weight Li₂SO₄, and between 1 and 10 % by weight LiCI, based on the total weight of LiBSCI in the composite solid electrolyte mixture.

5. A composite solid electrolyte obtainable by sintering the composite solid electrolyte mixture according to any one of the preceding claims, wherein the composite solid electrolyte comprises a lithium garnet-type structure material and LiBSCI, wherein LiBSCI comprises LisBOs, Li₂SO₄ and LiCl.

6. The composite solid electrolyte according to claim 5, wherein the lithium garnet-type structure material LLZO is lithium lanthanum zirconium oxide (LLZO), preferably wherein LLZO is doped, more preferably wherein LLZO is Al-doped LLZO.

7. The composite solid electrolyte according to any one of claims 5 to 6, comprising a matrix comprising LiBSCI and wherein the lithium garnet-type structure material is dispersed within the matrix.

8. The composite solid electrolyte according to any one of claims 5 to 7, wherein LiBSCI is at least partially a glassy phase.

9. The composite solid electrolyte according to any one of claims 5 to 8, wherein at least 60 % of the lithium garnet-type structure material is crystalline.

10. The composite solid electrolyte according to any one of claims 5 to 9, having a total ionic conductivity between 10⁻³ and 10⁻⁶ S/cm at a temperature between room temperature and 100 °C.

11. A solid state battery, comprising the composite solid electrolyte according to any one of claims 5 to 10.

12. The solid state battery according to claim 11, being an all ceramic solid state battery.

13. A method of producing a composite solid electrolyte comprising a lithium garnet-type structure material and LiBSCI, comprising sintering the mixture of any one of claims 1 to 4 at a temperature between 600 °C and 1000 °C in an inert atmosphere.

14. A method of producing a solid state battery comprising the composite solid electrolyte of any one of claims 5 to 9 or obtained by the method according to claim 13, comprising
- applying the composite solid electrolyte mixture of any one of claims 1 to 4 to a surface of an anode or a cathode,
- sintering at a temperature between 600 °C and 1000 °C in an inert atmosphere, and
- providing a cathode or an anode at the exposed surface of the sintered mixture, thereby obtaining the solid state battery.

15. The method of producing a solid state battery according to claim 14, wherein both the anode and the cathode are provided prior to sintering, thereby providing the composite solid electrode mixture between the anode and the cathode, and wherein sintering comprises sintering of the anode-mixture-cathode assembly.
